# EUROPEAN PATENT SPECIFICATION

(11) **EP 2 393 659 B1**
(45) Date of publication and mention of the grant of the patent: **13.06.2018**
(21) Application number: 10739276.3
(22) Date of filing: 09.02.2010
(51) Int. Cl.: B32B 29/04, B32B 27/20

(54) **COMPOSITES FOR PACKAGING ARTICLES AND METHOD OF MAKING SAME**
VERBUNDSTOFFE FÜR VERPACKUNGSARTIKEL UND HERSTELLUNGSVERFAHREN DAFÜR
COMPOSITES POUR L'EMBALLAGE D'ARTICLES ET LEUR PROCÉDÉ DE FABRICATION

(30) Priority: 09.02.2009 US 368130
(43) Date of publication of application: 14.12.2011
(60) Divisional application: 18156779.3
(73) Proprietor: Smart Planet Technologies, Inc., Irvine, CA 92612 (US)
(72) Inventor: TILTON, Christopher, R., Laguna Hills, California 92653 (US)
(74) Representative: Parry, Simon James
(86) International application number: PCT/US2010/023671
(87) International publication number: WO 2010/091427

(56) References cited:
- US-A- 5 830 548
- US-A1- 2005 238 824
- US-A1- 2009 047 511
- US-B1- 6 387 504

## Description

### BACKGROUND OF THE INVENTION

The present invention relates generally to composite structures used to fabricate storage articles such as retail, display, and/or shipping product packages, and more particularly, to composite structures having significant mineral and fiber content, which may include natural fibers, that are highly attractive, efficient to manufacture, and environmentally friendly.

Packages and packaging materials for product retail and shipping purposes are typically designed to be sufficiently durable to allow reliable use of such materials. Considerations that are taken into account in the development of such packages and materials include their resistance to heat, fire, tearing, wrinkling, scuffing, and moisture, as well as resistance to infiltration by rodents and other pests, and the ability of the packages and materials to deter theft. Their tensile and tear strength are also considered. The packages and packaging materials are also desirably relatively inexpensive to manufacture, and are preferably attractive enough to the customer in appearance, print quality, feel, and touch to encourage use of the products as well as to enhance the product image or association.

However, it can be difficult to create packaging products that are both attractive to consumers and inexpensive to fabricate while also being sufficiently durable to meet the needs of retail and shipping use. For example, some lower cost packaging options are poorly configured to prevent theft because of minimal investment in protective structures. Examples of packages that may not be as great of a theft deterrent are common blister packages, consumer style folding cartons and boxes, and shrink-wrapped or flexible film style packaging. While clamshell style packaging is an example of more theft resistant packaging due to the typically higher gauge materials used therein, the packaging is also typically more expensive due to the use of the higher cost materials.

A further problem that exists with prior packaging products is that these products may not incorporate environmentally friendly materials and designs, particularly at low cost levels that offer affordability. Environmentally friendly materials can have desirable attributes such as biodegradability, compostability, a high recycled content, recycle-ability, and may also use less energy, pollute less, and generate fewer greenhouse gases in their manufacture than previous materials. Such environmentally friendly materials are increasingly in demand from consumers and retailers, and can be beneficial for manufacturers by reducing adverse environmental impact of the material.

As used herein, in addition to the above, "environmentally friendly" refers to goods that are considered to inflict minimal harm on the environment. They may also be referred to as "green" or "eco-friendly" or "nature friendly" or others.

Examples of environmentally friendly earth based materials are talc, diatomaceous earth, a mineral-containing layer, mica, silica, glass, clays, zeolytes, and slate, all of which are materials that can be combined with bonding agents to form flat rolls and sheets. High content mineral materials such as these are available with the trade name Viastone from Taiwan Long Meng, Taipei, Taiwan, and other mineral-containing materials from other manufacturers. The mineral-based materials can be fabricated from natural sources, such as limestone among others, and can be biodegradable, photodegradable, and compostable, use less energy, no water, and fewer chemicals to manufacture than fiber-based materials.

A configuration that is often used for shipping and/or retail packages is a carton or box shape that is space efficient, durable, and theft resistant. Carton or box packaging can be formed of paperboard materials such as Kraft boards, box boards, corrugated boards, *etc.*, that are durable and readily machinable, for example by automated scoring, folding, bending, die-cutting, and even cartoning, to form a desired box form. Unfortunately, many cost appealing paperboard materials used to form such packages often do not have a surface that lends itself to high quality printing, with the result that the paperboard boxes and cartons often have an unrefined and industrial look that can be unattractive to consumers. Also, some higher quality carton boards comprise virgin fibers that require the use of substantial amounts of bleaching agents and chemicals. Additionally, paperboard boxes and cartons have little or no resistance to heat, fire, tearing, wrinkling, and scuffing. Finally, great amounts of energy and water usage are required in milling paper and box boards.

While mineral-containing materials offer great advantages compared to carton and paperboards, most particularly in the cost-per-ton category, and they can also be provided in forms that are readily printable, these materials and the products incorporating them are typically very dense with poor yields, lack stiffness and MD/CD fiber structure and strength, and are therefore not readily machinable as they are lacking in the tensile strength and other characteristics that are necessary for proper converting and machining of the product. Because of these drawbacks, minerals are most often found to have no real structural benefit and are not a proper option for packaging.

US2009/047511 A1 discloses composites for packaging articles and methods of making them. US 5,830,548 discloses methods of producing laminated structures including inorganically filled sheets. US 2005/0238824 A1 discloses urethane acrylate composite structures. US 6,387,504 B1 discloses polymer surfaced composites for floor tiles and other building products.

Accordingly, there remains a need in the art for retail and/or shipping packages that are durable and cost effective while also being attractive to consumers in terms of appearance and touch. There is also a need for retail and/or shipping packages that are durable and attractive while incorporating environmentally friendly materials and being resistant to theft. There is a further need for materials for forming attractive retail and/or shipping products that are readily machinable either at the point of manufacture (e.g., via scoring, folding, die-cutting, thermo or vacuum forming) or the point of distribution (e.g., via cartoning and gluing). There is also a need to provide packages having a good printing surface so that more attractive product and marketing information and labels may be formed on the packaging.

### SUMMARY OF THE INVENTION

The present invention specifically addresses and alleviates the above-identified deficiencies in the art. In this regard, the present invention is directed to an environmentally friendly composite suitable for fabricating storage articles at least partially therefrom (e.g., a retail and/or shipping package). The composite structure includes single or multiple fiber-containing layers, such as a paperboard layer or other layer, and a concentrated mineral-containing layer or layers covering a respective fiber-containing layer, where the mineral-containing layer is substantially continuously bonded to the fiber containing layer along the surface of the fiber-containing layer at the interface between the layers. The fiber-containing layer and mineral-containing layer can be shaped, sized, and manufactured such that the composite structure formed therefrom is capable of being shaped to form at least a portion of the storage article. Surprisingly, the composite structure formed from the fiber-containing layer and mineral-containing layer has a high degree of pliability and flexibility that is increased over the pliability and flexibility of the fiber-containing layer or mineral-containing layer alone. The composite structure also has enhanced characteristics such as a bright and attractive printing surface that, along with the pliability, render it attractive to consumers. The composite structure further has mass, stiffness, and tensile strength and other characteristics that allow it to be readily machined into desired storage article forms, such as storage boxes and cartons, which have high durability as well as good moisture resistance and biodegradability. In another aspect in accordance with the invention, the fiber-containing layer may comprise only natural fibers.

In another aspect in accordance with the invention, the composite structure is formed by bonding the mineral-containing layer to the fiber-containing layer under conditions selected to form the composite. For example the mineral layer can be adhered to the fiber-containing layer by applying adhesive to the layers and joining the layers together in a hot or cold gluing or adhesion process.

In yet a further aspect in accordance with the invention, a mineral structure suitable for forming storage articles can be provided, the structure comprising an extruded or blown mineral with a bonding agent comprising a mix of polymers, including polypropylene. The mineral-containing structure is sized and manufactured such that it is capable of being shaped to form a layer of the composite structure. The bonding agent can also contain some amounts of polypropylene for added heat resistance. This feature is enhances heat tolerance in oven and microwave cooking applications.

In a more detailed aspect in accordance with the invention, the composite structure is formed into the shape of a box or carton for retail and/or shipping purposes. The composite structure may also be formed into the shape of a container liner, corrugated medium, corrugated liners, a shipping mailer, a display or display tray, slip or tear sheets, pallet covers, corrugated structures and interior protective packaging components, and other retail and/or shipping components. The structure can also contain woven and non-woven reinforcing flat webbed materials as a layer. The layer adds significant burst strength and tear resistance. The common term in the art for this webbing layer is "scrim."

In yet further detailed aspects, there is provided a composite structure of at least two layers, not requiring a bonding film, comprising a substantially non-synthetic, blended, mixed, translucent, flaked, or thermoplastic structure; by weight containing less than 25 % polymers, e.g. co-polymers, homo-polymers, monomers, or poly-lactic acid and other acids and combinations thereof, and contains at least 5% natural mineral content, comprising: layer(s) of non-impregnated rolled or sheeted natural fibers in calipers between around 2 mil and 1000 mil, e.g. pulp, cellulosic fiber, cotton, rice, cloth, bagasse, or paper fiber(s) applied, without requiring film stretching, to mineral containing layers; all layers are solid and have opposing flat surfaces that may or may not require calendaring wherein the fiber-containing layer has a thickness of from about 1.5 mils to about 1000 mils. Further, the fiber layers can have a basis weight from about 10 to about 128 lbs/1000 sq. ft. and 20 g/m² to about 1500 g/m² and a tensile strength of from about 20 to about 1200 MD and about 25 to about 1500 CD. The fiber layers of unheated, non-metal or non-impregnated minerals with bonding agents combined with a mineral-containing layer(s), the mineral-containing layer comprising a basis weight of about 30 to about 500 lbs/1000 sq. ft. and from about 35 to about 1500 g/m², in the form of rolls and sheets that are unblended within the composite comprising at least 10 % by weight of the entire composite structure, a density of the mineral containing layer of between 0.3 to 1.50 g/m³, calipers between 1.3 mil and 50.0 mil, and contain organic minerals e.g. diatomaceous earth, ground calcium carbonate, mica, silica, glass, clays, zeolytes, slate, etc., and combinations thereof. The mineral containing layer is substantially and continuously bonded, without requiring stretching, across the entire contact surface of the fiber containing layers.

In further, more detailed aspects, the invention provides for a pliable composite structure containing a prescribed amount of a thermo-formable and non-thermo-formable bonding agent in the mineral-containing layer(s) that is sufficient to form the storage article shape via thermo-forming, pressure forming, or vacuum-forming. The composite bonding agent can also comprise thermoplastic polymers. The fiber composite structure can be treated to provide a substantial moisture resistance or moisture barrier. The mineral-containing and fiber-containing layers can have biodegradable content. The composite structure can have compostable content. The composite structure can have photodegradable content. The composite structure can have recycled and recyclable content. The fiber structure can also be poly coated for moisture resistance. The composite structure wherein one or more surfaces are coated with water or solvent based heat seal coatings. In other aspects, one or more sides can have applied embossed foil or metalized film stamping. In yet a further aspect, one or more layers can be corrugated.

The present invention is best understood by reference to the following detailed description of preferred embodiments when read in conjunction with the accompanying exemplary drawings.

### Brief Description of the Drawings

FIGURE 1 is a cross-sectional side view of a composite structure having a fiber-containing layer and a mineral-containing layer directly bonded to and covering the fiber-containing layer in accordance with aspects of the invention, a surface of the mineral-containing layer providing an external surface of the composite structure on which printing may be formed;
FIG. 2 is a cross-sectional side view of a composite structure similar to FIG. 1 but with the fiber-containing layer having first and second mineral-containing layers located on opposite sides with each mineral-containing layer being directly bonded to and covering a surface of the fiber-containing layer in accordance with aspects of the invention, a surface of each of the mineral-containing layers providing first and second external surfaces of the composite structure on which printing may be formed, with neither the first nor the second external surfaces being covered by any other material;
FIG. 3 is a perspective view of a storage box formed of the composite structure shown in either FIGS. 1 or 2 that may be used as a shipping container;
FIG. 4 is a perspective view of a storage box differing from that of FIG. 3, also formed of the composite structure shown in either FIGS. 1 or 2 having a bendable top for closing the storage container, which may be used as a retail box;
FIG. 5 is a front view of a shipping mailer formed of the composite structure of either FIGS. 1 or 2, usable for shipping documents or other items;
FIGS. 6A-6G are perspective views of embodiments of retail displays and display trays formed of the composite structure of either FIGS. 1 or 2 containing bent, cut, and printable portions;
FIG. 7 is a cross-sectional side view of a corrugated structure, portions of which are formed of the composite structure of either FIGS. 1 or 2;
FIG. 8 is a perspective, cut-away view of the corrugated structure shown in FIG. 7;
FIG. 9 is top perspective view of a tear sheet or slip sheet formed of the composite structure shown in either FIGS. 1 or 2 which may optionally be used as a pallet cover;
FIG. 10 is a cross-sectional side view of an interior protective packaging component having the composite structure of FIGS. 1 and 2 shaped onto a shock absorbing material; and
FIG. 11 is a perspective, exploded view of a vacuum-forming apparatus suitable for shaping composite structures into shapes for storage articles.

Common reference numerals are used throughout the drawings and detailed description to indicate like elements.

### Detailed Description of the Preferred Embodiments

The detailed description set forth below is intended as a description of presently preferred embodiments of the invention, and is not intended to represent the only forms in which the present invention may be constructed or utilized. The description sets forth the functions and sequences of steps for constructing and operating the invention. It is to be understood, however, that the same or equivalent functions and sequences may be accomplished by different embodiments and that they are also intended to be encompassed by the invention unless they fall outside the scope of the claims.

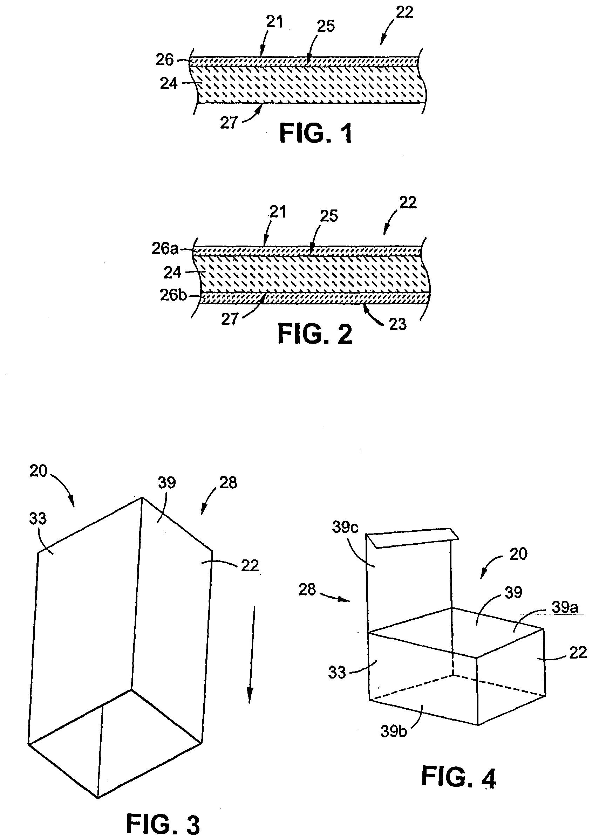

It has been discovered that environmentally friendly and attractive storage articles 20, such as for example retail and/or shipping packages shown in FIGS. 3 and 4, can be constructed at least in part from a composite structure 22 shown in FIG. 1. In that embodiment, the composite is formed from a fiber-containing layer 24 and a mineral-containing layer 26 covering the fiber-containing layer 24. The mineral-containing layer 26 in this embodiment is directly bonded to the fiber-containing layer. Also, the mineral-containing layer is substantially continuously bonded to the fiber-containing layer 24 along a surface 25 of the fiber-containing layer 24 that is at the interface between the two layers 24, 26, thereby forming a unitary composite structure. The manufacture of the composite structure 22, including the shapes, sizes, and manufacture of the fiber-containing layer 24 and mineral-containing layer 26, is controlled such that the composite structure 22 formed therefrom has a pleasing and attractive pliability, as well as a tensile strength and other processing-related characteristics that are suitable to allow for the production of the storage articles 20 (FIGS. 3 and 4). The pliability of the composite structure 22 imparts an attractive tactile feel to the articles 20 that is a substantial improvement over prior products. The composite structure 22 can also be readily transformed into desired storage article components 33 (FIGS. 3 and 4) by machining the composite structure 22, for example by at least one of scoring, folding, creasing, and die-cutting of the pliable composite structure 22, as well as by using other shaping techniques.

In one embodiment, the composite structure 22 has a pliability that is increased over what the fiber-containing layer 24 would have alone if used apart from the composite structure 22. In other words, the formation of the composite structure 22 provides for a structure having a pliability that is greater than that of the original fiber containing layer 24 used to form the composite. For example, the pliability of the composite structure 22 may be at least about 20 % higher than that of the fiber-containing layer 24 alone, such as even at least about 50% higher, as measured by as measured by bendability and pliability standards known to those of ordinary skill in the art, including ASTM D228-02, #10 and ASTM D6125-97 (2002), both of which standards are herein incorporated by reference in their entireties.

As known to those of ordinary skill in the art, a "composite" material is a material comprising two or more substances or layers having different physical characteristics, in which each substance or layer retains its identity while contributing desirable properties to the whole. The term "composite" may especially refer to those materials for which each substance contributes desirable properties to the whole that are greater than the otherwise additive contribution of each substance in the absence of the other, in effect creating a material that has properties greater than the mere sum of its parts. This is in contrast to, for example, prior art paper fibers and natural fibers with coatings and films, heated and stretch applied films, among others, designed primarily for moisture barrier and printability and print quality improvements that do not materially change the performance, environmental, or structural characteristics in a significant manner.

The pliable composite structure 22 among others, according to the present invention contain unique specified material basis weights, composition, and structural attributes that are directly bonded along substantially the entire interface between the layers 24, 26, such as substantially continuously along an entire surface 25 of the base layer 24, to form a single composite structure. The resulting structure has far different performance objectives and out performs other packaging art. Also, the characteristics and manufacture of the layers 24, 26 and composite structure 22 are selected such that the combined composite structure 22 has properties including pliability and machinability that go beyond the capabilities of either material alone and that are not achieved by the prior art product.

The composite structure 22 can be formed by controlling the sizes, shapes, and manufacture of the mineral-containing layer 26 and fiber-containing layer 24, as well as the composite structure manufacturing process. For example, parameters that can be controlled to achieve the improved composite structure 22 having the desired pliability and aesthetic characteristics, as well as desired durability and machinability, can include at least one of the thickness, the basis weight, the density, the tensile strength, and the chemical content of the layers 24 and 26.

In one embodiment, the chemical composition of the mineral layer 26 can be altered to provide the composite structure 22 having the desired characteristics. Suitable mineral-containing layers 26 may comprise from up to 85 % by weight of minerals of various types and compositions. The mineral-containing layer 26 further comprises a bonding agent mixed with the mineral component that provides a medium for bonding the mineral content within the layer 26. In one embodiment, a type and prescribed amount of the bonding agent can be added to the mineral-containing layer 26 that is sufficient to provide a composite structure 22 that has a desired level of pliability, while also being readily machinable.

The composition of the fiber-containing layer 24 can also be controlled to provide a composite structure 22 having the desired characteristics, such as the desired pliability, stiffness, mass, caliper, dead fold, and machinability of the structure 22. The fiber-containing layer 24 comprises at least one of many natural fibers, and has desirable tensile strength and other characteristics that render the layer suitable for machining processes used to form the storage article 20 of FIGS. 3 and 4. For example, the fiber-containing layer 24 may be in the form of a fiberboard layer, and even a paperboard layer, such as one of the various different types of paperboard roll and sheet materials that are known in the art. Examples of suitable fiberboard and/or paperboard materials include, for example, recycled folding boxboards (RFB), bleached Kraft board, unbleached Kraft board, such as C1S and C2S solid bleached sulfate boards (SBS), as well as coated recycled boards (CRB) and uncoated recycled boards (URB), clay coated light black boards (CCLB) and triplex and duplex boards.

The fiberboards and/or paperboards used for the fiber-containing layer 24 typically contain primarily cellulosic and/or wood pulp-based fibers, although they may also have other types of natural fiber content that fit the desired structure. The fiber-containing layer 24 also desirably comprises a relatively high level of recycled and/or post-consumer recycled fiber content. Also, tree-free fibers offer attractive environmental alternatives. For example, the recycled folding boxboard and coated and uncoated recycled boards can contain 100 % recycled content, of which up to 35 % by weight is post-consumer recycled content. The triplex and duplex boards, which are coated recycled boards having a high content of post consumer recycled fibers, can contain up to 100% recycled content and greater than 90 % or 95 % post-consumer recycled content, respectively.

In one embodiment, the fiber-containing layer consists of only natural fibers. In another embodiment, the fiber-containing layer may comprise synthetic fibers.

The thickness of one or more of the layers 26 and 24 can also be controlled to provide more or less pliability and machinability in the resulting composite structure 22. The thicknesses of the layers 24 and 26 are also selected such that the composite 22 formed therefrom is readily machinable. Furthermore, the thicknesses of the layers 26 and 24 are also selected with regard to desired durability requirements, with thicker layers providing more durability in some embodiments over very thin layers. A suitable thickness of the mineral-containing layer 26 that provides good pliability as well as durability and machinability of the composite structure 22 may be, for example, from about 1.5 to about 30 mils (0.038 to about 0.762 mm). As used herein, a "mil" is one-thousandth of an inch. A suitable thickness of the fiber-containing layer 24 can vary according to the density, stiffness, and tensile strength of the type of paperboard being used. For example, the thickness of the layer may be from about 4 mils to about 28 mils (0.1 to about 0.711 mm) for paperboard types such as C1S and C2S SBS paperboard, recycled folding boxboard, bleached and unbleached Kraft board, coated and uncoated recycled board, and folding box board, and may be from about 12 mils to about 23 mils (0.31 to about 0.58 mm) for paperboard types such as triplex and duplex paperboards.

The basis weights and densities of the mineral-containing layer 26 and fiber-containing layer 24 are also selected to provide a composite structure 22 having the desired attributes. The basis weight and densities of the fiber-containing layer 24 and mineral-containing layer 26 are selected to allow for ready machinability of the final composite structure 22, as a finished composite structure 22 that is either too light or too heavy may not be suitable for manipulation by standard paper and paperboard machines, such as scoring, folding, die-cutting, gluing, and cartoning machines. A suitable basis weight of the mineral-containing layer 26 can be, for example, from about 15 lbs/1000 ft² to about 240 lbs/1000 ft², and a suitable weight may be from about 40 g/m² to about 900 g/m². A suitable basis weight of the fiber-containing layer 24 can be from about 26 lbs/1000 ft² to about 130 lbs/1000 ft², or from about 210 g/m² to about 900 g/m². For example, for C1S and C2S SBS board, recycled folding boxboard, unbleached Kraft board, coated recycled board, uncoated recycled board and folding box board, a suitable basis weight may be from about 53 lbs/1000 ft² to about 128 lbs/1000 ft², and also from about 210 g/m² to about 900 g/m². For fiber-containing layers 24 containing triplex and duplex boards, a suitable basis weight may be from about 41 lbs/1000 ft² to about 110 lbs/1000 ft², as well as from about 225 g/m² to about 450 g/m², and a thickness of from about 4 mils to 1000 mils. Other natural fibers such as bagasse, cotton, pulp, cloth, etc., can be used assuming the performance and material attributes fall within the stated ranges.

The fiber-containing layer 24 is also selected to have tensile strength characteristics that result in the formation of the composite structure 22 that can be readily machined. The desired tensile strength characteristics can include the tear resistance of the paperboard layer 24 as measured in machine direction ("MD") or cross-direction ("CD"). The cross-direction (CD) is typically defined as the direction across the web of the paperboard, *i.e.* at a ninety degree (90°) direction with respect to the grain of the fiber in the fiberboard layer 24. The machine direction (MD) is typically defined as the direction that runs parallel to the grain of the fibers in the fiberboard layer 24. The MD and CD tensile strengths of paperboard materials can be measured according to the ASTM D5342-97 Standard (also called the Taber-Type testing standard), which is herein incorporated by reference in its entirety, as is known to those of ordinary skill in the art. "ASTM" refers to the American Society For Testing And Materials, commonly also referred to as ASTM International.

Materials having a tensile strength within a specified range are capable of being processed by paperboard machining equipment, such as automated scoring, folding, die-cutting, and forming machines, to provide final storage article shapes. In contrast, materials that are lacking in proper tensile strength characteristics may be too brittle or stiff, or alternatively too elastic, to be machined in standard paperboard machining processes. In one embodiment, a suitable paperboard layer 24, such as the box boards, Kraft boards and recycled boards described above, has a tensile strength as measured by the ASTM D5342-97 Standard (taber-type standard) of from about 125 to about 900 MD, and from about 55 to about 400 CD. In another embodiment, a suitable paperboard layer 24, such as a triplex or duplex paperboard layer 24, has a tensile strength as measured by the ASTM D5342-97 Standard, of from about 144 to about 685 MD.

It should be noted that the mineral-containing layer 26 is not typically selected with regards to a CD or MD stiffness, dead fold performance, or tensile strength, as the mineral-containing layer effectively does not have a CD or MD tear strength value that is measurable by the same standards used for paperboard. The lack of a comparable tensile strength in the mineral-containing layer is one of the characteristics that renders a stand-alone mineral-containing layer 26 unsuitable for the standard machining processes that are typically used to shape and form paperboard materials and other materials into finished storage articles. Higher content polymer materials and synthetic combinations using coextrusion, multiple layer laminations, and stretching can be considered; however, extruded and blown film polymer costs and yields are unfavorably expensive compared to the cost of earth based minerals that are held with bonding agents. The stated art specifications are unique and maximize/optimize the finished composite for cost and performance, using stated mineral and fiber specifications.

The composite structure 22 formed from the continuously bonded mineral-containing layer and paperboard layer has material characteristics that render it suitable for use in the formation of the storage articles 20 (FIGS. 3 and 4), including machinability and pliability. In one embodiment, the composite structure 22 comprises a paperboard layer 24 directly bonded to a mineral-containing layer 26 on one or more surfaces 25 and 27 of the paperboard layer, to form either double or triple layer composites suitable for use in, for example, storage boxes or cartons. FIG. 2 shows an example of a triple layer composite structure having first and second mineral-containing layers 26a and 26b, directly bonded to the top and bottom surfaces 25 and 27 of the paperboard layer 24. FIGS. 1 and 2 show examples of double and triple layer composite structures, although more layers may be used. Such double or multiple layer composite structures 22 can have a basis weight of from about 40 lbs/1000 ft² to about 175 lbs/1000 ft², a basis weight of from about 80 g/m² to about 900 g/m², a tensile strength of about 125 to about 900 MD and about 55 to about 400 CD, as measured by the ASTM D5342-97 Standard, and a thickness of from about 4 mils to about 100 mils (0.2 to about 2.45 mm).

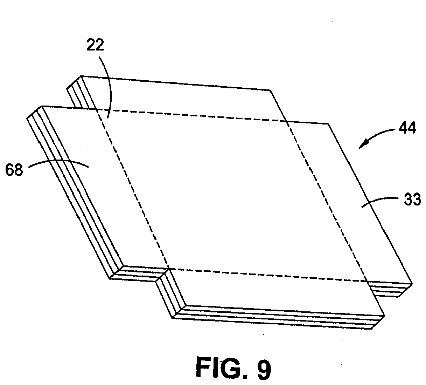

In yet another embodiment, the composite structure 22 comprises multiple sheets of paperboard layers 24 bonded to mineral-containing layers 26, as in the formation of slip or tear sheets 44, as shown for example in FIG. 9. Such multi-layer composite structure 22 can have a basis weight of from about 198 lbs/1000 ft² to about 525 lbs/1000 ft², a density of from about 648 g/m² to about 2,640 g/m², a tensile strength of about 375 to about 2700 MD and about 165 to about 1,200 CD, as measured by the ASTM D5342-97 Standard, and a thickness of from about 45 mils to about 100 mils (1.14 to about 2.45 mm). While the multi-layer composite structure 22 that makes up the relatively heavy slip and tear sheets 44 may not be as readily machinable as lighter weight composite structures, the multi-layer composite structure 22 nonetheless has enhanced pliability that renders it aesthetically appealing, and retains sufficient paperboard characteristics that render it suitable for its function. The composite structure can also be used in a wide array of consumer packaging applications demanding a high degree of vertical stacking strength and anti-theft performance.

The composite structures 22 in FIGS. 1 and 2 can be fabricated using a variety of different manufacturing techniques. For example, a method of forming the composite structure 22 can comprise a milling step in which paperboard is formed into sheets having the desired characteristics and thickness, and the resulting sheets are gathered onto rolls. The fabrication process can also include the step of extrusion or extrusion-lamination of the mineral-containing layer material into sheets having the desired characteristics and thickness, and gathering the resulting sheets into rolls. The fabrication process can further comprise directly bonding the paperboard layer 24 to the mineral-containing layer 26 to form the improved composite structure 22. The paperboard layer 24 may be at least partially covered with the mineral-containing layer 26 on one or more surfaces of the layer 24, such as on top and bottom surfaces 25, 27, or on only a single surface, as shown in FIG. 1.

The paperboard layer 24 can be bonded to the mineral-containing layer 26 by adhering the layers 24 and 26 to one another, for example by applying pressure to one or more of the materials forming the layers 24 and 26, or by optionally applying an adhesive between the layers 24 and 26. In one embodiment, the pliable composite structure 22 is formed without the use of added adhesive between the layers 24 and 26. In yet another embodiment, an adhesive is applied to a surface of one or more of the layers 24 and 26, such as a top surface 25 of the paperboard layer 24, to adhere the layers 24 and 26 to one another. In this embodiment, the adhesive may be applied to substantially the entire surface 25 at the interface 19 between the paperboard layer 24 and mineral-containing layer 26 to ensure bonding of the layers 24 and 26 across the entire surface 25. The conditions under which bonding of the layers 24 and 26 is carried out can be selected to provide optimum adhesion of the layers 24 and 26 to one another, as well as a substantially continuous bond between the layers 24 and 26 that extends across the entire length and width of the surface 25. For example, in a suitable hot application process for bonding the layers 24 and 26, an adhesive having a viscosity of from about 660 cP to about 1,480 cP is applied to one or more of the layers 24 and 26 at an elevated temperature of from about 300° F (148.9° C) to about 385° F (196.1° C). In an example of a suitable cold application process for bonding the layers 24, 26, an adhesive having a viscosity of from about 1,000 cP to about 2,100 cP is applied at a temperature of from about 27.5 °C to about 30 °C.

The final composite structure 22 has the improved characteristics as shown in Table 1 below. As can be seen from the table, the effect of forming the composite structure 22 is that the desirable tensile strength and other machine-processing related characteristics of the paperboard or other natural fiber layer 24 are maintained, thereby providing a durable composite structure 22 that is capable of being machined by standard paperboard machining processes, while also achieving a pliability of the composite structure 22 that is aesthetically appealing and that is greater than that of the paperboard material alone.

**Table 1**

| Material | Tensile Strength (MD) | Tensile Strength (CD) | Pliability | Machinability | Photo-degradability |
|---|---|---|---|---|---|
| Paperboard | 125-900 | 55-400 | No | Yes | No |
| Mineral layer | None | None | Yes | No | Yes |
| Composite Paperboard/Mineral Structure | 125-900 | 55-400 | Yes | Yes | Yes |

The composite structure 22 also has other benefits over non-composite paperboard materials used for the packaging and storage article 20. For example the composite structure 22 provides an improved moisture barrier over typical paperboard materials due to the bonding agent used in the mineral-containing layer. Such agents may include high density polyethylene, bio-polymers, polymers, or poly-lactic acids. The bonding agent, along with the minerals, also provide an improved fire and heat resistance for the composite structure 22 by significantly raising the flash point. Polymers such as HDPE can be made to be bio-degradable and photodegradable, and compostable typically by introducing one or more additives, typically during extrusion, such as ketone groups sensitive to UV light which can cause scissioning of the polymer, or other photosensitizing additives that can initiate photo oxidation of the polymer, also resulting in scissioning of the polymer. Where the fibers of the fiber- or paperboard-containing layer are all natural, the bio-degradability of the composite structure is greatly increased. Furthermore, the increased density of the mineral-containing layer results in improved rodent and other pest protection because of the increased difficulty in breaching the layer.

Furthermore, the increased density of the composite structure having the mineral-containing layer and the fiber-containing layer disclosed herein results in greater theft deterrence without the increased cost of the prior art materials. The increased density of the composite structure in accordance with the invention also provides greater wrinkle resistance and also provides static-electricity resistance due to its composition.

The composite structure 22 also has a premium printing surface 21 by virtue of the mineral-containing layer 26. Furthermore, the composite structure 22 is estimated to require 25 % to 65 % less water for manufacture than similar paperboard materials, as the mineral-containing layer containing layer 26 essentially does not require water usage for its fabrication. Also, the composite structure 22 renders certain non-biodegradable paperboards biodegradable and compostable, such as C1S and C2S SBS paperboard, unbleached Kraft board and folding box board. Because the minerals are often environmentally friendly substances, the composite structure 22, with the minerals and natural fibers, is fully recyclable, can have a recycled fiber content or post-consumer recycled fiber content of from about 35 % to about 75 % and also has an estimated 20 % to 65 % reduction in air discharge, formaldehyde, and bleaching agents over standard paperboard materials.

Various machining steps can be performed to shape the composite structure 22 formed from the mineral-containing layer 26 and paperboard layer 24 into the desired storage article form. The machining steps can include folding, bending, creasing, and otherwise forming or pressing the composite structure 22, as well as cutting steps and gluing steps to form the desired shapes. The machining steps can be carried out at one or more of the point of manufacture and the point of distribution. For example, machining steps can be carried out at the point of manufacture to cut, score, and fold the composite structure 22 into a desired shape that may be suitable for shipping and/or storing of the article 20. At the point of distribution of the storage article 20, gluing and forming steps can be performed to achieve the final storage article shape, such as cartoning steps in the case of the manufacture of cartons or boxes.

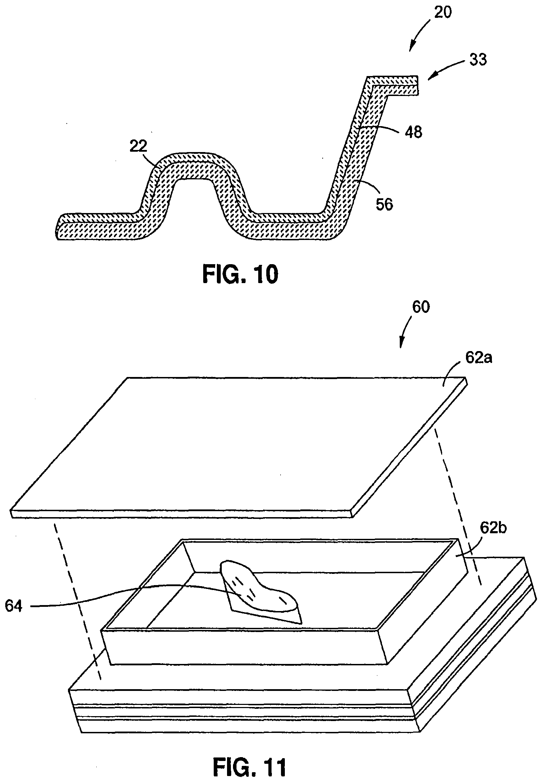

In further embodiments, the individual materials and/or pliable composite structure 22 are formed into a desired shape for the storage article 20 by molding under pressure, heat, or vacuum. For example, in vacuum- and pressure-forming processes, the composite structure is forced against a mold under the force of vacuum or pressure, as the case may be, such that the material or composite adopts a shape conforming to the mold. As another example, in a thermoforming process, the materials and/or composite are heated while pressed against a mold to deform the material until it adopts a desired shape. Such molding may allow the pliable composite structure 22 to adopt desired shapes, including even rounded or curved shapes. An example of a vacuum molding press 60 is shown in FIG. 11, which shows top and bottom press plates 62a and 62b and a mold 64, in which the pliable composite structure 22 would be placed between the presses 62a and 62b and mold 64 and then vacuum pressed onto the mold by application of a vacuum between the presses 62a and 62b. The pliability of the structure 22 may also allow various folding and creasing steps to be performed to form the final component shape 20, without requiring the application of heat or vacuum. A combination of various molding and/or shaping steps may also be performed to form the final storage article 20, as well as various cutting and shaping steps and steps to adhere additional decorative or functional parts. Also, one or more composite structures 22 can be stacked or adhered to one another to form a desired storage article component 33.

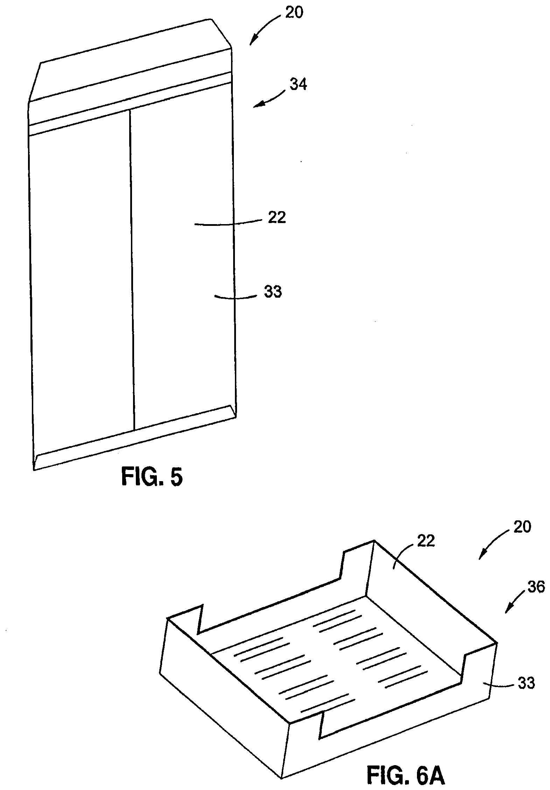

In one embodiment, the composite structure 22 that is used to form a storage article 20 such as at least one of a retail package 20 shown in FIG. 4 and a shipping package 20 shown in FIG. 5 having printing formed on portions thereof, such as printed advertisements or information about the product contained therein. For example, the storage article 20 can have printing on one or both sides of the mineral-containing layer or layers 26 (FIGS. 1 and 2), such as on a printing surface 21 and also or alternatively on one or both sides of the paperboard layer 24 as in the case of FIG. 2 where there are two mineral-containing layers 26. The printing can be carried out by well-known printing techniques, such as flexographic and lithographic printing. Storage articles 20 having composite structures 22 with mineral-containing layers 26 can be attractively and brightly printed to increase consumer demand for the product as well as to convey important information about the product and contents to the customer. In this embodiment, a printing step comprises feeding the base material or mineral-containing material through a printer. The printer can print on one or multiple surfaces of the material, and the same material can also be sent through the same or a subsequent printer.

As shown in FIGS. 1 and 2, the mineral-containing layer 26 or layers each have premium printing surfaces 21 (FIG. 1) and 23 (FIG. 2). The surfaces in these figures may be used to accept ink for text or graphics as desired. In this embodiment, the printing surfaces 21 and 23 comprise an external surface or surfaces of the composite structure 22 and are not covered by another layer of any type. However, they may accept embossed foil or metalized film stamping or other such material.

In one embodiment, the composite structure 22 is formed into the shape of a component 33 comprising a box 28 for at least one of retail and shipping, as shown for example in FIGS. 3 and 4. The box 28 may be in the form of a cube, rectangular or other box shape that is sized to contain a retail or shipping product. In one embodiment, the box 28 is formed by preparing the composite structure 22 in the form of a pliable sheet, for example by performing the milling step and other processing steps as described above, cutting the structure into the desired shape, and then folding and/or creasing the sheet, either manually or by machine, such as *via* an automated cartoning process, to form the final three-dimensional box shape. In the embodiment shown in FIG. 4, the composite structure 22 forms the walls 39 of the box, including bottom and side walls 39a and 39b as well as a fold-over lid portion 39c. The box 28 formed from the composite structure 22 having high pliability has a smooth and flexible tactile feel that is attractive and pleasing to the touch, while also being sturdy and durable enough to allow use in retail on store shelves and displays.

In one embodiment, the pliability of the box 28 is such that it can be readily folded and unfolded into the box shape 28, thereby allowing the user to store the box 28 in the unfolded state and then quickly fold the box into shape when needed for use. The box 28 is also desirably sturdy enough to withstand vertical or other stacking of the box 28 with other boxes, such as in pallets for shipping or storage of products, and may also provide substantial theft deterrence. In one embodiment, the attractive feel of the box 28 as well as the enhanced luster and shine of the box imparted by the ground calcium-carbonate-containing material makes the box 28 particularly suitable for the retail of high-end and luxury products where the appeal of the overall retail package is important, such as in the retail of perfumes, cosmetics and jewelry.

In yet another embodiment, the composite structure 22 forms a part of a shipping mailer 34, such as an envelope used to ship documents and other objects through UPS, FEDEX, USPS, etc., as shown in FIG. 5. The composite structure 22 may be used to form a part of or even all of the mailer structure, excluding sealing parts such as adhesive or attachment brads that seal the mailer opening for shipping, and may be fabricated by using a series of folding, creasing, and adhesive steps to prepare the desired mailer shape. The composite structure 22 is desirably sufficiently pliable such that documents and other objects can be readily accommodated in the mailer 34, while also being sufficiently durable to resist tearing, snagging, and ripping of the shipping mailer 34. The shipping mailer 34 formed from the composite structure 22 provides numerous advantages over prior mailers 34 not having the improved composite structure 22. For example, the shipping mailer 34 having the composite structure imparts improved moisture resistance as discussed above while also allowing for highly attractive printing on the packages, so that instructions regarding the content, shipping instructions or advertisements can be printed on the mailer. This is in contrast to prior mailers, such as *e.g.* paper mailers, which are typically fabricated to be either water resistant or readily printable, but do not typically have a highly attractive and readily printable surface that is also moisture resistant and durable, as is the case for mailers having the mineral-containing composite layer 26 (FIG. 1).

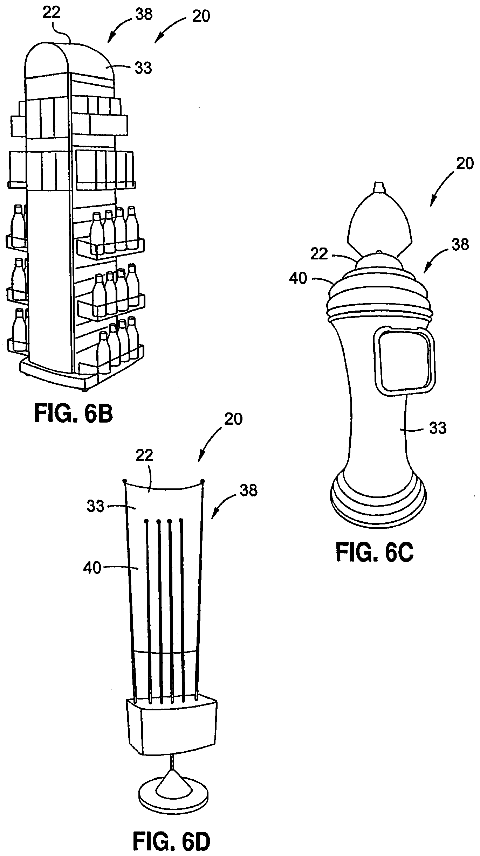

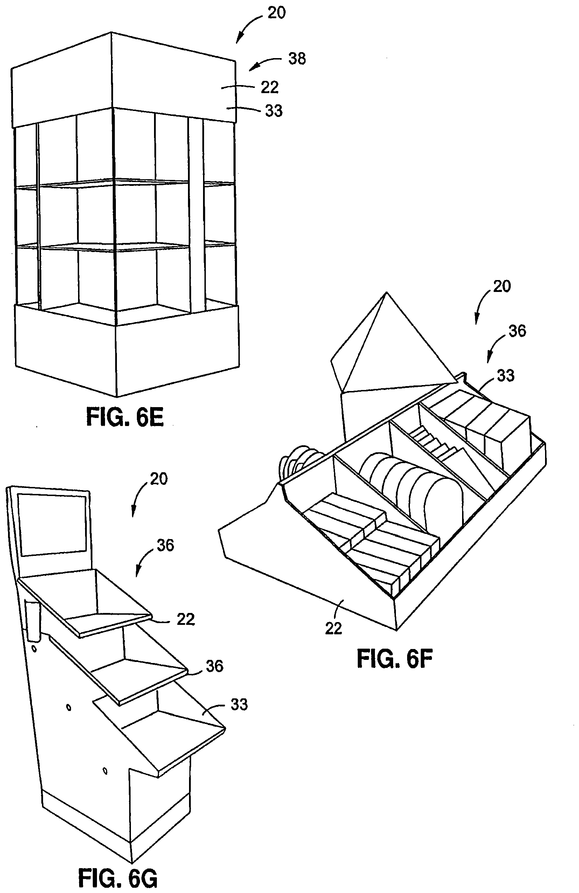

Other embodiments of the storage article 20 having the composite structure 22 include display trays 36 and other sales displays 38, as show in FIGS. 6A-6G. For example, in the embodiments shown in FIGS. 6A and 6F, the composite structure 22 is cut, shaped and folded into the shape of display trays 36 capable of holding and displaying products for retail. The trays 36 can have walls and a base sized to hold a desired number of objects, and can also contain cutouts, as shown in FIG. 6A, or other display arrangement that holds the objects in the tray 36. FIGS. 6B-6E and 6G show embodiments of displays 38 that are either formed from or contain the composite structure 22 having the mineral-containing material. For example, in the embodiments shown in FIGS. 6B-6D, the composite structure 22 is formed or molded to form parts of the display 38. The composite structure 22 can be molded by bending or folding, as well as via thermo or vacuum-forming to form desired parts of the display 38.

The embodiments shown in FIGS. 6B, 6D, and 6E show display cases formed from portions of printed, folded and glued composite structures 22, optionally with conventionally lithographed parts. The embodiment shown in FIG. 6C shows a display 38 that has been molded into a desired shape by vacuum forming front and back halves of the display that are formed of the composite structure 22. The composite structure 22 is desirably sufficiently flexible such that it can be molded with vacuum or thermoforming techniques to form rounded parts 40, such as those shown in the embodiment of FIG. 6C, which may be particularly desirable for attractive displays 38, as well as in other products. FIG. 6G shows an embodiment in which the composite structure 22 has been used to form a display 38 having display trays 36. The display 38 and display trays 36 that are formed from or otherwise contain the composite structure 22 provide highly attractive and moisture resistant displays and trays, that can be brightly and attractively printed for retail and advertisement purposes and are highly scuff resistant. The composite structure 22 is advantageously shapeable into the desired retail form, such as by folding or molding or other machining of the structure 22, and thus provides a highly adaptable material for use in improved retail displays.

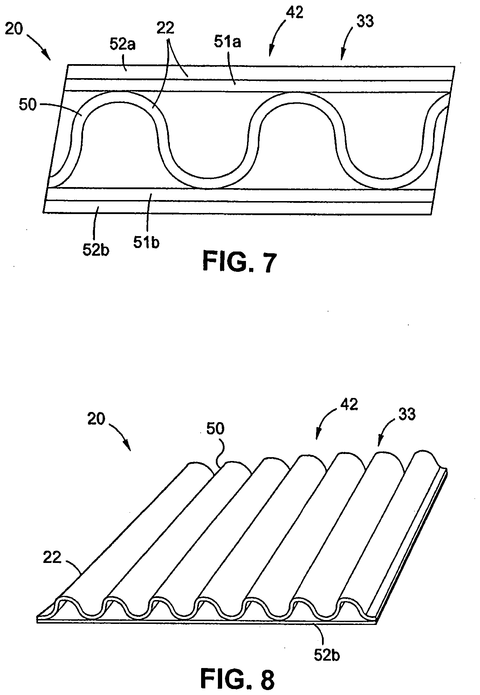

Other uses of the composite structure 22 include its use to form corrugated structures 42, embodiments of which are shown in FIGS. 7 and 8, as well as in the formation of slip or tear sheets or protective top pallet covers 44, an embodiment of which is shown in FIG. 9, as an interior protective packaging component 48, an embodiment of which is shown in FIG. 10, and also molded interior protective packaging components 48, embodiments of which may be formed through the use of the press 60 shown FIG. 11. In the embodiment shown in FIGS. 7 and 8, corrugated flutes 50 are sandwiched in between top and bottom sheets 52a and 52b to form corrugated structures 42 suitable for the formation of corrugated boxes and other similar applications. One or more of the flutes 50 and sheets 52a and 52b, may be formed of the composite structure 22, to form a corrugated structure 42 having enhanced pliability as well as moisture and pest resistance, as discussed above. Additionally and/or alternatively, the composite structure 22 may contain a mineral-containing layer 26 (FIG. 1) that covers a paperboard layer 24 that is overtop of corrugated parts such as flutes 50. For example, as shown in FIG. 7, the composite structure 22 may comprise a paperboard layer that corresponds to at least one of an inner top and bottom sheet 51a and 51b that are part of a corrugated material containing flutes 50, with these paperboard layers 51a and 51b being covered by at least one of top and bottom sheets 52a and 52b comprising a mineral-containing layer.

In the embodiment shown in FIG. 9, the composite structure 22 is formed into slip sheets or tear sheets 44 for storing or shipping products, which sheets 44 can also be scored or folded for use as protective top pallet covers. As is also shown in FIG. 9, a plurality of composite sheets 44 can be adhered together to form a multi-layer structure 68, such as a multi-layer tear sheet 44.

In the embodiment shown in FIG. 10, the interior protective packaging component 48 comprises a composite structure 22 that is molded into a shape suitable for conforming to or otherwise holding and protecting an object within a shipping package, or to fill voids in a package, to stabilize and protect fragile items for shipping. The composite structure 22 may be molded into a desired shape and then placed overtop of a shock absorbing material 56, such as any of those described above. The composite structure 22 used in these embodiment imparts those advantages as described above, including increased pliability to allow for the formation of the desired structures as well as to improve the look and feel of the structure. The structure 22 also has improved moisture, theft, and pest resistance, while also maintaining good fire and heat resistance, as discussed above. The structure 22 further allows high quality printing thereon to allow for user instructions or advertisements to be printed on the products.

The composite structure 22 (FIG. 1) has characteristics such as pliability and tensile strength that render it suitable for the formation of storage articles, including any of those storage articles described and shown herein as well as others. The composite structure 22 can be shaped, sized, and manufactured such that it is pliable and such that it is capable of being shaped to form numerous types of storage articles.

As used herein, non-mineral natural fibers include animal fibers such as wool and silk and vegetable fibers such as cotton and cellulose.

The invention differs from prior art coatings in that in the invention, a composite is provided. As used herein, a coating is a material applied to other materials such that the coating conforms to the material it is applied to. A composite layer does not conform to the surface size and shape of the other materials in the composite; it, as a layer with its own unique shape and conformation, combined with one or more other layers forms a new composite material with improved or greatly altered structural and strength characteristics.

Additional modifications and improvements of the present invention may also be apparent to those of ordinary skill in the art. Thus, the particular combination of components and steps described and illustrated herein is intended to represent only certain embodiments of the present invention, and is not intended to serve as limitations of alternative devices and methods. Along these lines, it should be understood that the storage articles 20 having the pliable composite structure 22 may take any of a variety of forms that are known or later developed in the art, and further contemplates that existing or newly formed storage articles 20, such as newly formed retail and/or shipping packages, should fall within the scope of the present invention. Also, it should be understood that the paperboard layer 24 and mineral-containing layer 26 can comprise various different materials such as other packaging materials and bonding agents that are other than those specifically described.

## Claims

1. A printable and machinable composite structure of from 0.051 mm to 25.4 mm (2 to 1000 mils) thick, the structure by weight equal to or less than 22.15 kg/m2 (525 lbs/1000 sq. ft.) basis weight and containing less than 25 % polymers, and containing natural mineral content, comprising:
a fiber-containing layer formed from natural fibers from 0.033 to 22.86 mm (1.3 mil to 900 mil) thickness, the layer being solid and having opposing flat contact surfaces, wherein the fiber-containing layer has a basis weight of from 20 to 800 g/m2 and tensile strength of 20 to 1200 MD and 25 to 1500 CD measured as per ASTM D5342-97; and
a mineral-containing layer formed of natural minerals mixed with a polymer bonding agent;
wherein the mineral-containing layer is substantially and continuously bonded, without requiring stretching, across the entire contact surface of the fiber-containing layer;
wherein the mineral-containing layer comprises at least 15 % by weight polymer bonding agent, the mineral-containing layer being an outer facing surface of the composite structure;
wherein the composite structure is more pliable than the fiber-containing layer alone and apart from the composite structure per ASTM D228-02 #10 and ASTM D 6125-97 (2002);
wherein the composite structure is more moisture resistant than a paperboard;
wherein the outer facing mineral containing layer is printable using common printing techniques;
wherein the composite structure comprises at least 40 % natural fibers; and
wherein the outer facing mineral containing layer comprises at least 1 % by weight of the composite structure.

2. The composite structure according to claim 1 wherein the composite structure further comprises woven and non-woven webbing reinforcement as one or more layers.

3. The composite structure according to either claim 1 or 2 wherein the mineral containing layer comprises a pliable mineral composite containing an amount of a thermo-formable bonding agent sufficient so that a storage article containing the mineral containing layer may be formed into a selected shape via thermo-forming, pressure forming, or vacuum forming.

4. The composite structure according to any preceding claim wherein the fiber containing layer is poly coated.

5. The composite structure according to any preceding claim wherein one or more surfaces are clay coated, and/or are coated with water or solvent based heat seal coatings.

6. The composite structure according to any preceding claim wherein one or more layers are formed into a corrugated shape.

7. The composite structure according to any preceding claim wherein the mineral containing layer comprises sustainable polymer content of bio-polymers.

8. The composite structure according to any preceding claim wherein the mineral containing layer comprises at least one of the group consisting of starch, wheat and corn.

9. The composite structure according to any preceding claim wherein the fiber containing layer comprises at least one of the group consisting of bleached Kraft board, unbleached Kraft board, recycled folding boxboard, folding box board, coated recycled board, and uncoated recycled board.

10. The composite structure according to any preceding claim wherein the fiber containing layer comprises a basis weight of from 0.42 to 33. 7 kg/m2 (5 to 800 lbs/1000 sq. ft.), a thickness of from 0.10 to 1.14 mm (4 mils to 45 mils), and a tensile strength of from 75 to 1200 MD and 25 to 900 CD measured as per ASTM D5342-97.

11. The composite structure according to any preceding claim comprising a basis weight of from 648 to 2640 g/m2, a thickness of from 1.14 to 2.03 mm (45 mils to 80 mils), and a tensile strength of from 375 to 2700 MD and 165 to 1200 CD measured as per ASTM D5342-97.

12. A composite structure according to any preceding claim, wherein the mineral containing layer comprises at least 2 % by weight of the composite structure.

13. A composite structure according to any preceding claim, wherein the mineral containing layer has a basis weight of 35 g/m2 to 1500 g/m2.

14. A composite structure according to any preceding claim, wherein the mineral containing layer has a density from 0.30 g/cm3 to 1.5 g/cm3.

## Patentansprüche

1. Bedruckbare und maschinell bearbeitbare Verbund-Struktur von 0,051 mm bis 25,4 mm (2 bis 1000 mil) Dicke, wobei die Struktur, bezogen auf das Gewicht, gleich oder weniger als 22,15 kg/m2 (525 lbs/1000 Quadratfuß) Basisgewicht aufweist und weniger als 25% Polymere enthält, und einen Gehalt an natürlichem Mineral enthält, umfassend:
eine aus Naturfasern von 0,033 bis 22,86 mm (1,3 mil bis 900 mil) Dicke gebildete faserhaltige Schicht, wobei die Schicht fest ist und gegenüberliegende flache Kontaktflächen aufweist, worin die faserhaltige Schicht ein Basisgewicht von 20 bis 800 g/m2 und eine gemäß ASTM D5342-97 gemessene Zugfestigkeit von 20 bis 1200 MD und 25 bis 1500 CD aufweist; und
eine mineralhaltige Schicht, die aus natürlichen Mineralien gebildet ist, die mit einem Polymerbindemittel gemischt sind;
worin die mineralhaltige Schicht, ohne ein Recken zu erfordern, im Wesentlichen und kontinuierlich über die gesamte Kontaktfläche mit der faserhaltigen Schicht haftschlüssig verbunden ist;
worin die mineralhaltige Schicht mindestens 15 Gew.-% eines Polymerbindemittels umfasst, wobei die mineralhaltige Schicht eine Außendeckflächen-Oberfläche der Verbund-Struktur ist;
worin die Verbund-Struktur biegsamer gemäß ASTM D228-02 #10 und ASTM D6125-97 (2002) als die faserhaltige Schicht alleine und getrennt von der Verbund-Struktur ist;
worin die Verbund-Struktur feuchtigkeitsbeständiger als ein Karton ist;
worin die mineralhaltige Außendeckflächen-Schicht unter Anwendung herkömmlicher Drucktechniken bedruckbar ist;
worin die Verbund-Struktur mindestens 40% Naturfasern umfasst; und
worin die mineralhaltige Außendeckflächen-Schicht mindestens 1 Gew.-% der Verbund-Struktur umfasst.

2. Verbund-Struktur gemäß Anspruch 1, worin die Verbund-Struktur ferner eine Verstärkung aus gewebtem und nicht-gewebtem Stoff als eine oder mehrere Schichten umfasst.

3. Verbund-Struktur gemäß Anspruch 1 oder Anspruch 2, worin die mineralhaltige Schicht einen biegsamen Mineralverbundwerkstoff umfasst, der einen Anteil eines wärmeformbaren Bindemittels enthält, der ausreicht, dass ein Lagerartikel, der die mineralhaltige Schicht enthält, durch Thermoformen, Formpressen oder Vakuumformen in eine ausgewählte Form ausgebildet werden kann.

4. Verbund-Struktur gemäß einem der vorangegangenen Ansprüche, worin die faserhaltige Schicht poly-beschichtet ist.

5. Verbund-Struktur gemäß einem der vorangegangenen Ansprüche, worin eine oder mehrere Oberflächen Ton-beschichtet sind und/oder mit auf Wasser oder Lösungsmittel basierenden Heißsiegelbeschichtungen beschichtet sind.

6. Verbund-Struktur gemäß einem der vorangegangenen Ansprüche, worin eine oder mehrere Schichten in einer gewellten Form ausgebildet sind.

7. Verbund-Struktur gemäß einem der vorangegangenen Ansprüche, worin die mineralhaltige Schicht einen nachhaltigen Polymergehalt von Bio-Polymeren enthält.

8. Verbund-Struktur nach einem der vorangegangenen Ansprüche, worin die mineralhaltige Schicht mindestens eines aus der aus Stärke, Weizen und Mais bestehenden Gruppe umfasst.

9. Verbund-Struktur gemäß einem der vorangegangenen Ansprüche, worin die faserhaltige Schicht mindestens eines aus der aus gebleichtem Kraftkarton, ungebleichtem Kraftkarton, wiederverwertetem Faltschachtelkarton, Faltschachtelkarton, beschichtetem wiederverwerteten Karton und unbeschichtetem wiederverwerteten Karton bestehenden Gruppe umfasst.

10. Verbund-Struktur gemäß einem der vorangegangenen Ansprüche, worin die faserhaltige Schicht ein Basisgewicht von 0,42 bis 33,7 kg/m2 (5 bis 800 lbs/1000 Quadratfuß), eine Dicke von 0,10 bis 1,14 mm (4 mil bis 45 mil), und eine gemäß ASTM D5342-97 gemessene Zugfestigkeit von 75 bis 1200 MD und 25 bis 900 CD umfasst.

11. Verbund-Struktur gemäß einem der vorangegangenen Ansprüche, umfassend ein Basisgewicht von 648 bis 2640 g/m2, eine Dicke von 1,14 bis 2,03 mm (45 mil bis 80 mil), und eine gemäß ASTM D5342-97 gemessene Zugfestigkeit von 375 bis 2700 MD und 165 bis 1200 CD.

12. Verbund-Struktur gemäß einem der vorangegangenen Ansprüche, worin die mineralhaltige Schicht mindestens 2 Gew.-% der Verbund-Struktur umfasst.

13. Verbund-Struktur gemäß einem der vorangegangenen Ansprüche, worin die mineralhaltige Schicht ein Basisgewicht von 35 g/m2 bis 1500 g/m2 aufweist.

14. Verbund-Struktur gemäß einem der vorangegangenen Ansprüche, worin die mineralhaltige Schicht eine Dichte von 0,30 g/cm3 bis 1,5 g/cm3 aufweist.

## Revendications

1. Structure composite imprimable et usinable de 0,051 mm à 25,4 mm (de 2 à 1 000 mils) d'épaisseur, la structure ayant un poids inférieur ou égal à 22,15 kg/m2 (525 livres/1 000 pieds carrés) de poids de base et contenant moins de 25 % de polymères, et contenant une teneur en minéraux naturels, comprenant :
une couche contenant des fibres formée à partir de fibres naturelles de 0,033 à 22,86 mm (de 1,3 mil à 900 mils) d'épaisseur, la couche étant solide et ayant des surfaces de contact planes opposées, dans laquelle la couche contenant des fibres a un poids de base de 20 à 800 g/m2 et une résistance à la traction de 20 à 1 200 dans la DM et de 25 à 1 500 dans la DT mesurée selon la norme ASTM D5342-97 ; et
une couche contenant des minéraux formée de minéraux naturels mélangés avec un liant polymère ;
dans laquelle la couche contenant des minéraux est sensiblement et continuellement liée, sans nécessiter d'étirage, sur toute la surface de contact de la couche contenant des fibres ;
dans laquelle la couche contenant des minéraux comprend au moins 15 % en poids de liant polymère, la couche contenant des minéraux étant une surface orientée vers l'extérieur de la structure composite ;
dans laquelle la structure composite est plus pliable que la couche contenant des fibres seule et sans la structure composite selon la norme ASTM D228-02 n° 10 et ASTM D 6125-97 (2002) ;
dans laquelle la structure composite est plus résistante à l'humidité qu'un carton ;
dans laquelle la couche contenant des minéraux orientée vers l'extérieur est imprimable à l'aide de techniques d'impression courantes ;
dans laquelle la structure composite comprend au moins 40 % de fibres naturelles ; et
dans laquelle la couche contenant des minéraux orientée vers l'extérieur comprend au moins 1 % en poids de la structure composite.

2. Structure composite selon la revendication 1 dans laquelle la structure composite comprend en outre un renforcement de toile à sangle tissé et non tissé en tant qu'une ou plusieurs couches.

3. Structure composite selon la revendication 1 ou 2 dans laquelle la couche contenant des minéraux comprend un composite minéral pliable contenant une quantité d'un liant thermoformable suffisante pour qu'un article de stockage contenant la couche contenant des minéraux puisse être formé sous une forme choisie par thermoformage, formage sous pression ou formage sous vide.

4. Structure composite selon une quelconque revendication précédente dans laquelle la couche contenant des fibres est poly-revêtue.

5. Structure composite selon une quelconque revendication précédente dans laquelle une ou plusieurs surfaces sont revêtues d'argile, et/ou sont revêtues de revêtements thermoscellables à base d'eau ou de solvant.

6. Structure composite selon une quelconque revendication précédente dans laquelle une ou plusieurs couches sont formées sous une forme ondulée.

7. Structure composite selon une quelconque revendication précédente dans laquelle la couche contenant des minéraux comprend une teneur en polymères durables de bio-polymères.

8. Structure composite selon une quelconque revendication précédente dans laquelle la couche contenant des minéraux comprend au moins l'un du groupe constitué de l'amidon, du blé et du maïs.

9. Structure composite selon une quelconque revendication précédente dans laquelle la couche contenant des fibres comprend au moins l'un du groupe constitué du carton kraft blanchi, du carton kraft non blanchi, du carton pour boîtes pliantes recyclé, du carton pour boîtes pliantes, du carton couché recyclé et du carton non couché recyclé.

10. Structure composite selon une quelconque revendication précédente dans laquelle la couche contenant des fibres comprend un poids de base de 0,42 à 33,7 kg/m2 (de 5 à 800 livres/1 000 pieds carrés), une épaisseur de 0,10 à 1,14 mm (de 4 mils à 45 mils), et une résistance à la traction de 75 à 1 200 dans la DM et de 25 à 900 dans la DT mesurée selon la norme ASTM D5342-97.

11. Structure composite selon une quelconque revendication précédente comprenant un poids de base de 648 à 2 640 g/m2, une épaisseur de 1,14 à 2,03 mm (de 45 mils à 80 mils), et une résistance à la traction de 375 à 2 700 dans la DM et de 165 à 1 200 dans la DT mesurée selon la norme ASTM D5342-97.

12. Structure composite selon une quelconque revendication précédente, dans laquelle la couche contenant des minéraux comprend au moins 2 % en poids de la structure composite.

13. Structure composite selon une quelconque revendication précédente, dans laquelle la couche contenant des minéraux a un poids de base de 35 g/m2 à 1 500 g/m2.

14. Structure composite selon une quelconque revendication précédente, dans laquelle la couche contenant des minéraux a une masse volumique de 0,30 g/cm3 à 1,5 g/cm3.
